# EUROPEAN PATENT SPECIFICATION

(11) **EP 0 446 953 B1**
(45) Date of publication and mention of the grant of the patent: **08.11.1995**
(21) Application number: 91104071.5
(22) Date of filing: 15.03.1991
(51) Int. Cl.: F16K 31/02, E03C 1/05

(54) **Human body sensing mechanism for an automatic faucet apparatus**
Sensor zum Erspüren eines menschlichen Körpers für automatischen Wasserhahn
Mécanisme de détection d'un corps humain pour robinet automatique

(30) Priority: 16.03.1990 JP 27509/90
(43) Date of publication of application: 18.09.1991
(73) Proprietor: INAX CORPORATION, Tokoname-shi Aichi-ken (JP)
(72) Inventor: Takashi, Yasuo, Aichi-ken (JP)
(74) Representative: DIEHL GLAESER HILTL & PARTNER

(56) References cited:
- DE-A- 2 533 527
- PATENT ABSTRACTS OF JAPAN vol. 7, no. 106 (M-213)(1251) May 10, 1983 & JP-A-58 28 076 (MATSUSHITA DENKI SANGYO K.K ) February 18, 1983

## Description

The present invention relates to an improvement in a human body sensor provided at an automatic faucet apparatus which detects the existence of a human body to automatically control water discharge.

Conventionally, the art regarding an automatic faucet apparatus has been well known as disclosed in, for example, the U. S. Patent No. 4,688,277.

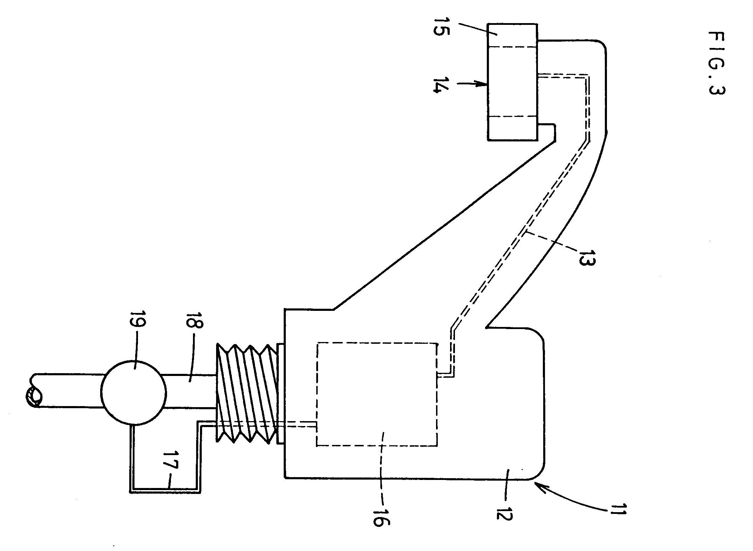

Fig. 3 as enclosed herewith is a structural view of a conventional automatic faucet 11, which is so constructed that a human body sensor 15 is mounted at a water outlet 14 of a faucet body 12, and a water discharge control device 16 is housed within the faucet body 12 and connected through a signal conductor 17 to an electromagnetic valve 19 provided on the way of a water supply pipe 18, so that the water discharge control device 16 receives through a signal conductor 13 a human body detection signal output from the human body sensor 15, thereby generating an operating signal to the electromagnetic valve 19.

The human body sensor 15 normally uses a device of diffuse reflection type utilizing the infrared ray. In other words, the human body sensor 15 is provided with an infrared ray emitting part and a receiving part for the reflected light, so that when a user extends his hands near the water outlet 14, the infrared ray emitted from the light emitting part is reflected and the reflected light is detected by the light receiving part, thereby outputting a human body detection signal. The water discharge control device 16 opens the electromagnet valve 19 on the basis of the human body detection signal, and discharges water from the water outlet 14 at the faucet body 12 through a water supply pipe 18 for a predetermined time or while receiving the human body detection signal.

The conventional automatic faucet apparatus 11 connects by wiring the human body sensor 15 and water discharge control device 16, whereby it is required that both the parts must be subjected to waterproof processing, thereby having the defect that a manufacturing process is complicated. For necessity of wiring connection the human body sensor 15 is defined in its mounting position to the water outlet 14. In the human body sensor 15 a light source for emitting the infrared ray, a detecting circuit of the received reflected light, and an output device for the human body detection signal are built in, thereby creating the problem in that not only the human body sensor 15 itself is large-sized and poor in appearance, but also space around the water outlet 14 is restricted. When the water outlet 14 is restricted therearound, various drawbacks are created in that the user not only is hindered from rinsing his fingers but also contacts the human body sensor 15 which causes the possibility of breaking the sensor 15.

DE-A-2533527 describes a device according to the preamble of claim 1 for discharging liquids through an outlet. The area below the outlet is watched by a proximity switch which is connected by wires with a magnet valve. The object underlying that prior art was to propose a device for discharging liquids through an outlet wherein the discharge of liquid is effected only in case of need and is carried out automatically.

That object of the prior art is clearly different from that of the present invention which aims at making the manufacturing process of a known faucet apparatus less complicated and to provide the possibility to make an automatic faucet apparatus by utilizing an already existing faucet.

For solving the technical problem the present invention provides a human body sensing mechanism for an automatic faucet apparatus which comprises in the vicinity of a water outlet a body of a human body sensor for detecting a human body and a water discharge control device for controlling the opening and closing of an electromagnetic valve on the way of a water passage positioned apart from said water outlet, characterized in that said body of the human body sensor is provided with a transmitting part for outputting a human detection signal by a radio system, and said water discharge control device is provided with a receiving part for receiving said human body detection signal transmitted by the radio system.
Fig. 1 is a side view of an automatic faucet apparatus provided with a radio system human body sensor of the present invention,
Fig. 2 is a side view of a modified embodiment of an automatic faucet apparatus of the present invention, and
Fig. 3 is a side view of the conventional automatic faucet apparatus.

Next, explanation will be given on an embodiment of the present invention by reference to the drawings.

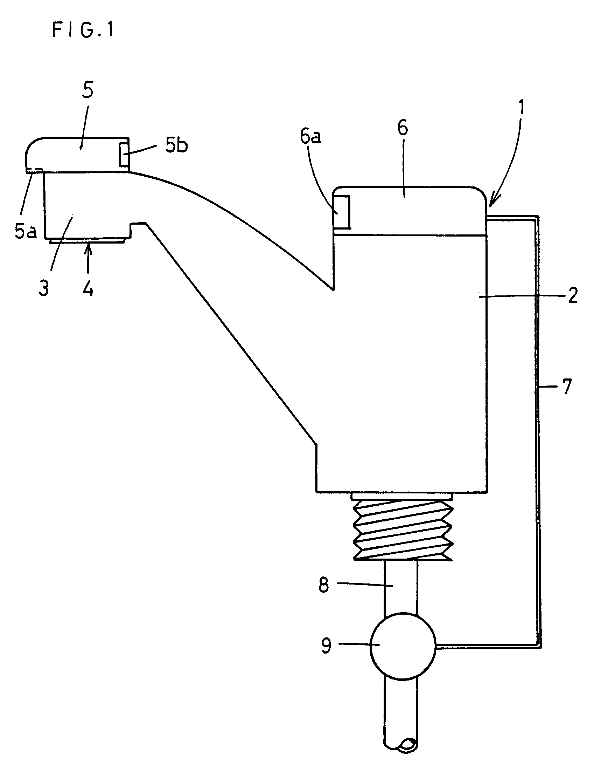

Fig. 1 shows an automatic faucet apparatus 1 provided with a human body sensor of the present invention, construction of which is outlined as follows:
A human body sensor body 5 is mounted on the upper surface of a water outlet 3 at the automatic faucet apparatus 1, and a water discharge control device 6 is provided at the upper portion of the faucet body 2 and connected through a signal conductor 7 to an electromagnetic valve 9 provided on the way of a water supply pipe 8. The human body sensor body 5 is provided with a transmitting part 5b for outputting a human body detection signal by radio waves, infrared ray, or ultrasonic waves, as well as a light emitting and light receiving part 5a for, for example, the infrared ray, for detecting the human body.

The light emitting and receiving part 5a need only be disposed at the position where the user's hand or the like extending toward a water outlet 4 is detectable, so that it is preferable that the human body sensor body 5 is mounted at the upper surface of water discharge part 3 opposite to the water outlet 4 side for not hindering the use of water. On the contrary, the water discharge control device 6 is required to be disposed at a position where a receiving part 6a is receivable of the human body detection signal output in the above-mentioned radio system. Therefore, it is preferable to dispose the water discharge control device 6 on the upper portion of faucet body 2, which is properly changeable by configuration or the like of the faucet body 2. In addition, the water discharge control device 6, as the same as the conventional apparatus, gives a command of opening the electromagnetic valve 9 through the signal conductor 7 on the basis of the human body detection signal, thereby starting water discharge.

The embodiment, which transmits by the radio system the signal between the human body sensor body 5 and the water discharge control device 6, requires no wiring therebetween. The conventional automatic faucet apparatus houses in the faucet body the water discharge device which is connected by wiring with the human body sensor, whereby it is impossible to construct the automatic faucet by utilizing the existing faucet. However, the automatic faucet apparatus of the present invention need not execute a troublesome wiring work, so that the human body sensor body 5 and water discharge control device 6 are mounted even on the existing not-automatic faucet and the electromagnetic valve 9 and water discharge control device 6 provided at the proper position of water supply pipe 8 are connected by the signal conductor 7 or the like, thereby enabling the automatic faucet apparatus 1 to be constructed with ease. Namely, the automatic faucet apparatus 1 of the present invention is advantageous in that the existing faucet is utilizable.

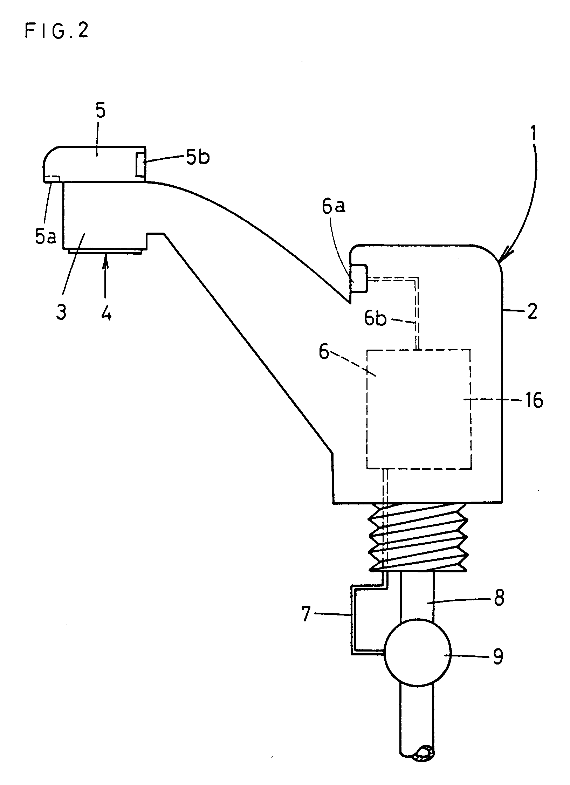

Fig. 2 shows a modified embodiment of the present invention. Although the former embodiment mounts the water discharge control device 6 outside the faucet body, the modified embodiment adopts construction such that a water discharge control device 6 is housed within the faucet body 2. In this case, a receiving part 6a for the human body detection signal output by the radio system from a transmitting part 5b at the human body sensor body 5 is provided at a proper location of the faucet body 2 and the receiving part 6a and water discharge control device 6 are connected by a signal conductor 6b or the like. Other components are in common with those in Fig. 1.

In this embodiment, the water discharge control device 6, which is housed in the faucet body 2, requires no wiring to the human body sensor body 5, thereby simplifying the construction of automatic faucet apparatus 1 more than the conventional one, thereby improving the manufacturing efficiency.

The water discharge control device 6, other than the above-mentioned, may be positioned below a wash counter at which the faucet body 2 is installed. The water discharge control device 6 is made separate from the faucet body 2, whereby the faucet body 2 can be simple in configuration. Human body detection means at the human body sensor body 5, other than using the infrared ray, may adopt utilization of ultrasonic waves. Thus, the present invention does not hinder various modification corresponding to the embodiments.

### Operation of the Invention:

By the above-mentioned construction, in the human body sensor of the present invention, the human body sensor body provided in the vicinity of the water outlet, when detecting a human body, outputs the human body detection signal from the transmitting part by the radio system and transmits the signal to the receiving part at the water discharge control device provided separately from the water outlet. Hence, the water discharge control device gives to the electromagnetic valve provided on the way of passage the command to open the valve, thereby discharging water for the predetermined or desired time period. The above-mentioned radio system may have transmission means using radio waves, electromagnetic waves of the infrared ray, or ultrasonic waves.

### Effect of the Invention

As seen from the above, the human body sensor of the present invention transmits the human body detection signal from the sensor body to the control device by the radio system, whereby the wiring connection between the sensor body and the control device is not required. Accordingly, since constraint in the disposed position of both the members is reduced, not only manufacture of the automatic faucet apparatus is facilitated, but also the existing faucet can be utilized to construct the automatic faucet apparatus.

Conventionally, since wiring connection has been required between the human body sensor body and the control device, a strict waterproof processing must be applied. On the contrary, the present invention need not execute the waterproof processing and wiring work, thereby saving labor of manufacturing.

Furthermore, no need of wiring connection restricts the degree of freedom of mounting the of human body sensor body. It is possible to mount the body at a location of not hindering the use thereof and to widen space around the water outlet, in other words, the use is improved to that extent.

Thus, the present invention demonstrates an effect rich in practicability.

## Claims

1. A human body sensing mechanism for an automatic faucet apparatus (1) which comprises in the vicinity of a water outlet (4) a body (5) of a human body sensor for detecting a human body and a water discharge control device (6) for controlling the opening and closing of an electromagnetic valve (9) on the way of a water passage (8) positioned apart from said water outlet (4), characterized in that said body (5) of the human body sensor is provided with a transmitting part (5b) for outputting a human detection signal by a radio system, and said water discharge control device (6) is provided with a receiving part (6a) for receiving said human body detection signal transmitted by the radio system.

## Patentansprüche

1. Körpersensormechanismus für eine automatische Wasserarmatur (1), die in der Nähe eines Wasserauslasses (4) einen Körper (5) eines Körpersensors zum Erfassen eines menschlichen Körpers und eine Wasserabgabe-Steuervorrichtung (6) zum Steuern des Öffnens und Schließens eines elektromagnetischen Ventils (9) in einem Wasserdurchgang (8), die abseits vom Wasserauslaß (4) angeordnet sind, aufweist, dadurch gekennzeichnet, daß der Körper (5) des Körpersensors mit einem Übertragungsteil (5b) zur Ausgabe eines Körpererfassungssignals über ein Funksystem versehen ist und die Wasserabgabe-Steuervorrichtung (6) mit einem Empfängerteil (6a) zum Empfangen des durch das Funksystem übertragenen Körpererfassungssignals versehen ist.

## Revendications

1. Mécanisme de détection de corps humain pour un dispositif de robinet automatique (1) qui comprend à proximité d'un orifice de sortie d'eau (4) un corps (5) d'un détecteur de corps humain pour détecter un corps humain et un dispositif de commande d'écoulement d'eau (6) pour commander l'ouverture et la fermeture d'une vanne électromagnétique (9) sur le trajet de passage de l'eau (8) placé à distance dudit orifice de sortie d'eau (4), caractérisé en ce que ledit corps (5) du détecteur de corps humain est muni d'une partie d'émission (5b) pour fournir un signal de détection de corps humain par un système radio, et en ce que ledit dispositif de commande d'écoulement d'eau (6) est muni d'une partie de réception (6a) pour recevoir ledit signal de détection de corps humain transmis par le système radio.
